# EUROPEAN PATENT APPLICATION

(11) **EP 3 177 047 A1**
(43) Date of publication of application: **07.06.2017**
(21) Application number: 14903003.3
(22) Date of filing: 30.09.2014
(51) Int. Cl.: H04W 4/06, H04W 72/04, H04W 88/00

(54) **TERMINAL, BASE STATION, SYSTEM, AND NOTIFICATION METHOD**

(71) Applicant: Huawei Technologies Co., Ltd., Longgang District Shenzhen, Guangdong 518129 (CN)
(72) Inventor: LIU, Yalin, Shenzhen Guangdong 518129 (CN); XIE, Yong, Shenzhen Guangdong 518129 (CN); CHEN, Jun, Shenzhen Guangdong 518129 (CN)
(74) Representative: Pfenning, Meinig & Partner mbB
(86) International application number: PCT/CN2014/088020
(87) International publication number: WO 2016/049897

(57) **Abstract**

The present invention discloses a terminal, a base station, a system, and a notification method. The terminal includes: a receiving module, configured to receive a system message broadcasted by a base station, where the system message carries resource configuration information of a dedicated channel, and the dedicated channel is used to transmit application data that is transmitted discontinuously and that has a length less than a preset threshold; a reading module, configured to read the resource configuration information of the dedicated channel from the system message and store the resource configuration information; and a sending module, configured to send, by using the dedicated channel and to the base station, the application data that is transmitted discontinuously and that has the length less than the preset threshold. By using the embodiments of the present invention, a problem that a base station occupies an air interface resource when notifying a terminal of information about a dedicated channel, and therefore a normal network service is interfered with may be resolved.

## Description

### TECHNICAL FIELD

The present invention relates to the field of communications technologies, and in particular, to a terminal, a base station, a system, and a notification method.

### BACKGROUND

With development of mobile Internet technologies, and especially with emergence and popularization of intelligent terminals such as mobile phones and tablet computers, more users directly use these terminals to access a network. In addition, with rapid development of operating system performance and hardware performance of terminals, much software that was used on computers can now be used on intelligent, miniaturized, and movable terminals. Especially, social networking software is relatively frequently used. The software is generally instant messaging software, and a network connection is characterized by instantaneousness, periodicity, and the like. Using instant messaging software as an example, the software sends a heartbeat packet every two minutes on an operating system of a terminal, so that the terminal periodically notifies a server of a status of the terminal. For this purpose, a network controller needs to transmit tens of pieces of network signaling, such as access signaling and bearer setup signaling. After transmitting the network signaling, the network controller releases an air interface resource 7 to 15 seconds later. During one month, even if a user that uses the instant messaging software performs no operation, 22320 heartbeat packets are sent. This is equivalent to consumption of a signaling processing capability of sending 22320 messages, or equivalent to consumption of a signaling processing capability of making more than ten thousand telephone calls, and traffic of 1.83 megabytes is generated.

It can be learned from above that while using instant messaging software, a terminal generates a large amount of network signaling to maintain a connection to a server, and the network signaling is generated to transmit only a few bytes. To be worse, the signaling may interfere with a normal network service. In addition, considering network development prospect in the future, a large quantity of terminals will be connected to networks at that time. Consequently, similar to sending an instant message, many terminals will discontinuously send data having relatively little content and a relatively short length to networks. Although the data may be sent relatively infrequently, a large quantity of network signaling resources will be consumed because there are more terminals. If a dedicated channel is set up to transmit such data or signaling, a base station needs to notify a terminal of information about the dedicated channel. In this case, an air interface resource still needs to be occupied, and a normal service is easily interfered with.

### SUMMARY

Embodiments of the present invention provide a terminal, a base station, a system, and a notification method, so as to resolve a problem that a base station occupies an air interface resource when notifying a terminal of information about a dedicated channel, and therefore a normal network service is interfered with.

A first aspect of the embodiments of the present invention provides a terminal, which may include:
a receiving module, configured to receive a system message broadcasted by a base station, where the system message carries resource configuration information of a dedicated channel, and the dedicated channel is used to transmit application data that is transmitted discontinuously and that has a length less than a preset threshold; and
a sending module, configured to send, by using the dedicated channel and to the base station, the application data that is transmitted discontinuously and that has the length less than the preset threshold.

In a first possible implementation manner of the first aspect, the terminal is in an idle mode.

With reference to the first aspect or with reference to the first possible implementation manner of the first aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the first aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the first aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the first aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the first aspect, in a sixth possible implementation manner, resource blocks of each of the sub-channels are consecutive in a time domain.

With reference to the first aspect or the first, the second, the third, the fourth, the fifth, or the sixth possible implementation manner of the first aspect, in a seventh possible implementation manner, the resource configuration information carried in the system message further includes an orthogonal code set or a non-orthogonal code set that is used to identify the terminal; and when sending the application data by using the dedicated channel, the sending module selects an orthogonal code or a non-orthogonal code from the orthogonal code set or the non-orthogonal code set, and sends both the application data and the orthogonal code or the non-orthogonal code.

With reference to the first aspect or the first, the second, the third, the fourth, the fifth, the sixth, or the seventh possible implementation manner of the first aspect, in an eighth possible implementation manner, when resource configuration of the dedicated channel changes, the receiving module is further configured to: receive an updated system message, and obtain resource configuration information of the changed dedicated channel, and the sending module is further configured to send the application data by using the changed dedicated channel.

A second aspect of the embodiments of the present invention provides a terminal, which may include:
an input apparatus, an output apparatus, a memory, and a processor, where
the memory is configured to store a program, and the processor is configured to call the program to perform the following steps:
   receiving a system message broadcasted by a base station, where the system message carries resource configuration information of a dedicated channel, and the dedicated channel is used to transmit application data that is transmitted discontinuously and that has a length less than a preset threshold; and
   sending, by using the dedicated channel and to the base station, the application data that is transmitted discontinuously and that has the length less than the preset threshold.

In a first possible implementation manner of the second aspect, the terminal is in an idle mode.

With reference to the second aspect or with reference to the first possible implementation manner of the second aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the second aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the second aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the second aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the second aspect, in a sixth possible implementation manner, resource blocks of each of the sub-channels are consecutive in a time domain.

With reference to the second aspect or the first, the second, the third, the fourth, the fifth, or the sixth possible implementation manner of the second aspect, in a seventh possible implementation manner, the resource configuration information carried in the system message further includes an orthogonal code set or a non-orthogonal code set that is used to identify the terminal; and when sending the application data by using the dedicated channel, the processor selects an orthogonal code or a non-orthogonal code from the orthogonal code set or the non-orthogonal code set, and sends both the application data and the orthogonal code or the non-orthogonal code.

With reference to the second aspect or the first, the second, the third, the fourth, the fifth, the sixth, or the seventh possible implementation manner of the second aspect, in an eighth possible implementation manner, when resource configuration of the dedicated channel changes, the processor is further configured to perform the following steps:
receiving an updated system message; obtaining resource configuration information of the changed dedicated channel; and sending the application data by using the changed dedicated channel.

A third aspect of the embodiments of the present invention provides a base station, which may include:
a broadcast module, configured to broadcast a system message to a terminal, where the system message includes resource configuration information of a dedicated channel, and the dedicated channel is used to transmit application data that is transmitted discontinuously and that has a length less than a preset threshold; and
a receiving module, configured to receive the application data that is sent by the terminal by using the dedicated channel, that is transmitted discontinuously, and that has the length less than the preset threshold.

In a first possible implementation manner of the third aspect, the terminal is in an idle mode.

With reference to the third aspect or with reference to the first possible implementation manner of the third aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the third aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the third aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the third aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the third aspect, in a sixth possible implementation manner, resource blocks of each of the sub-channels are consecutive in a time domain.

With reference to the third aspect or the first, the second, the third, the fourth, the fifth, or the sixth possible implementation manner of the third aspect, in a seventh possible implementation manner, the resource configuration information carried in the system message further includes an orthogonal code set or a non-orthogonal code set that is used to identify the terminal, and the receiving module is further configured to: receive the application data, and an orthogonal code or a non-orthogonal code that are sent by the terminal by using the dedicated channel, and recognize the terminal by using the orthogonal code or the non-orthogonal code.

With reference to the third aspect or the first, the second, the third, the fourth, the fifth, the sixth, or the seventh possible implementation manner of the third aspect, in an eighth possible implementation manner, when resource configuration of the dedicated channel changes, the broadcast module is further configured to broadcast an updated system message to the terminal.

A fourth aspect of the embodiments of the present invention provides a base station, which may include:
an input apparatus, an output apparatus, a memory, and a processor, where
the memory is configured to store a program, and the processor is configured to call the program to perform the following steps:
   broadcasting a system message to a terminal, where the system message includes resource configuration information of a dedicated channel, and the dedicated channel is used to transmit application data that is transmitted discontinuously and that has a length less than a preset threshold; and
   receiving the application data that is sent by the terminal by using the dedicated channel, that is transmitted discontinuously, and that has the length less than the preset threshold.

In a first possible implementation manner of the fourth aspect, the terminal is in an idle mode.

With reference to the fourth aspect or with reference to the first possible implementation manner of the fourth aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the fourth aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the fourth aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the fourth aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the fourth aspect, in a sixth possible implementation manner, resource blocks of each of the sub-channels are consecutive in a time domain.

With reference to the fourth aspect or the first, the second, the third, the fourth, the fifth, or the sixth possible implementation manner of the fourth aspect, in a seventh possible implementation manner, the resource configuration information carried in the system message further includes an orthogonal code set or a non-orthogonal code set that is used to identify the terminal, and the processor is further configured to: receive the application data, and an orthogonal code or a non-orthogonal code that are sent by the terminal by using the dedicated channel, and recognize the terminal by using the orthogonal code or the non-orthogonal code.

With reference to the fourth aspect or the first, the second, the third, the fourth, the fifth, the sixth, or the seventh possible implementation manner of the fourth aspect, in an eighth possible implementation manner, when resource configuration of the dedicated channel changes, the processor is further configured to broadcast an updated system message to the terminal.

A fifth aspect of the embodiments of the present invention provides a system, which may include:
the terminal according to any one of the first aspect or implementation manners of the first aspect of the embodiments of the present invention; and
the base station according to any one of the third aspect or implementation manners of the third aspect of the embodiments of the present invention.

A sixth aspect of the embodiments of the present invention provides a notification method, which may include:
receiving, by a terminal, a system message broadcasted by a base station, where the system message carries resource configuration information of a dedicated channel, and the dedicated channel is used to transmit application data that is transmitted discontinuously and that has a length less than a preset threshold; and
sending, by the terminal, by using the dedicated channel and to the base station, the application data that is transmitted discontinuously and that has the length less than the preset threshold.

In a first possible implementation manner of the sixth aspect, the terminal is in an idle mode.

With reference to the sixth aspect or with reference to the first possible implementation manner of the sixth aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the sixth aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the sixth aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the sixth aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the sixth aspect, in a sixth possible implementation manner, resource blocks of each of the sub-channels are consecutive in a time domain.

With reference to the sixth aspect or the first, the second, the third, the fourth, the fifth, or the sixth possible implementation manner of the sixth aspect, in a seventh possible implementation manner, the resource configuration information carried in the system message further includes an orthogonal code set or a non-orthogonal code set that is used to identify the terminal; and when sending the application data by using the dedicated channel, the terminal selects an orthogonal code or a non-orthogonal code from the orthogonal code set or the non-orthogonal code set, and sends both the application data and the orthogonal code or the non-orthogonal code.

With reference to the sixth aspect or the first, the second, the third, the fourth, the fifth, the sixth, or the seventh possible implementation manner of the sixth aspect, in an eighth possible implementation manner, when resource configuration of the dedicated channel changes, the terminal receives an updated system message, obtains resource configuration information of the changed dedicated channel, and sends the application data by using the changed dedicated channel.

A seventh aspect of the embodiments of the present invention provides a computer storage medium, where the computer storage medium stores a program, and the program is used to perform all or some steps of the notification method according to the sixth aspect of the embodiments of the present invention.

An eighth aspect of the embodiments of the present invention provides a notification method, which may include:
broadcasting, by a base station, a system message to a terminal, where the system message includes resource configuration information of a dedicated channel, and the dedicated channel is used to transmit application data that is transmitted discontinuously and that has a length less than a preset threshold; and
receiving the application data that is sent by the terminal by using the dedicated channel, that is transmitted discontinuously, and that has the length less than the preset threshold.

In a first possible implementation manner of the eighth aspect, the terminal is in an idle mode.

With reference to the eighth aspect or with reference to the first possible implementation manner of the eighth aspect, in a second possible implementation manner, the system message includes at least one system message block, a first system message block of the at least one system message block is used to carry primary scheduling information of the dedicated channel, and the primary scheduling information includes a length of a scheduling window, a scheduling period, and system message block mapping information.

With reference to the second possible implementation manner of the eighth aspect, in a third possible implementation manner, the first system message block is used to separately schedule each sub-channel on the dedicated channel, and secondary scheduling information of each sub-channel is transmitted separately by using another system message block of the at least one system message block except the first system message block.

With reference to the second possible implementation manner of the eighth aspect, in a fourth possible implementation manner, the first system message block is used to simultaneously schedule all sub-channels on the dedicated channel, and all secondary scheduling information of all sub-channels of the dedicated channel is stored and transmitted by using a second system message block of the at least one system message block.

With reference to the third or the fourth possible implementation manner of the eighth aspect, in a fifth possible implementation manner, the secondary scheduling information of each sub-channel includes: a resource block location, a frequency domain starting location, bandwidth, and a sub-channel scheduling period.

With reference to the third, the fourth, or the fifth possible implementation manner of the eighth aspect, in a sixth possible implementation manner, resource blocks of each of the sub-channels are consecutive in a time domain.

With reference to the eighth aspect or the first, the second, the third, the fourth, the fifth, or the sixth possible implementation manner of the eighth aspect, in a seventh possible implementation manner, the resource configuration information carried in the system message further includes an orthogonal code set or a non-orthogonal code set that is used to identify the terminal, and the base station receives the application data, and an orthogonal code or a non-orthogonal code that are sent by the terminal by using the dedicated channel, and recognizes the terminal by using the orthogonal code or the non-orthogonal code.

With reference to the eighth aspect or the first, the second, the third, the fourth, the fifth, the sixth, or the seventh possible implementation manner of the eighth aspect, in an eighth possible implementation manner, when resource configuration of the dedicated channel changes, the base station broadcasts an updated system message to the terminal.

A ninth aspect of the embodiments of the present invention provides a computer storage medium, where the computer storage medium stores a program, and the program is used to perform all or some steps of the notification method according to the eighth aspect of the embodiments of the present invention.

Implementation of the embodiments of the present invention brings the following beneficial effects:

By receiving a system message broadcasted by a base station, where the system message carries resource configuration information of a dedicated channel, the terminal can read the resource configuration information of the dedicated channel from the system message and store the resource configuration information, and use the dedicated channel when application data that is transmitted discontinuously and that has a length less than a preset threshold needs to be sent to the base station. In the entire process, there is no need to use new signaling and air interface resources; and when the dedicated channel is obtained, signaling resources and air interface resources are saved, and no normal network service is interfered with. After the dedicated channel is obtained, the channel may be used to transmit the application data, there is no need to exchange a great amount of signaling with the base station and establish a connection, and there is no need to occupy a relatively large quantity of signaling resources and air interface resources, thereby improving resource use efficiency of an entire system, and ensuring normal proceeding of normal network services.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an embodiment of a terminal according to an embodiment of the present invention;
FIG. 2 is a schematic structural diagram of another embodiment of a terminal according to an embodiment of the present invention;
FIG. 3 is a schematic structural diagram of an embodiment of a base station according to an embodiment of the present invention;
FIG. 4 is a schematic structural diagram of another embodiment of a base station according to an embodiment of the present invention;
FIG. 5 is a schematic structural diagram of a system according to an embodiment of the present invention;
FIG. 6 is a schematic flowchart of an embodiment of a notification method according to an embodiment of the present invention; and
FIG. 7 is a schematic flowchart of another embodiment of a notification method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

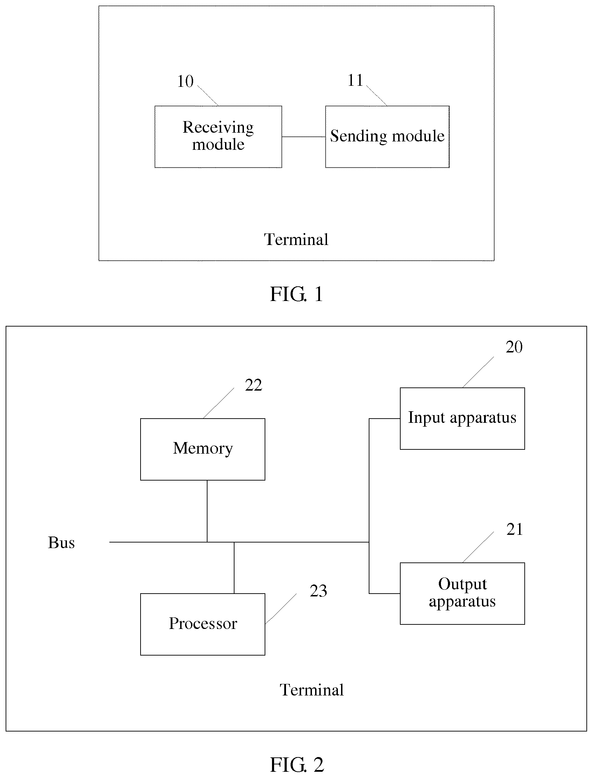

Referring to FIG. 1, FIG. 1 is a schematic structural diagram of an embodiment of a terminal according to an embodiment of the present invention. In this embodiment of the present invention, the terminal includes:
a receiving module 10, configured to receive a system message broadcasted by a base station, where
the system message carries resource configuration information of a dedicated channel, and the dedicated channel is used to transmit application data that is transmitted discontinuously and that has a length less than a preset threshold; and
a sending module 11, configured to send, by using the dedicated channel and to the base station, the application data that is transmitted discontinuously and that has the length less than the preset threshold.

Optionally, the terminal is in an idle mode. Before transmitting application data, a terminal in an idle mode needs to access a base station first, and exchange a large amount of signaling with the base station, to establish a connection. In this case, a large quantity of signaling resources are occupied, and a normal network service is affected. Therefore, in this embodiment, the terminal in the idle mode may transmit, by using the dedicated channel, the application data that is transmitted discontinuously and that has the length less than the preset threshold. However, because the terminal is in the idle mode, the terminal cannot receive other information sent by the base station. When the terminal enters a cell that is under the coverage of the base station, or moves from one cell to another cell, the terminal may read resource information of the dedicated channel from the system message broadcasted by the base station, and store the information. When a user needs to send or receive application data by using a dedicated channel, the user transmits or receives the application data by using the dedicated channel.

The application data that is transmitted discontinuously and that has the length less than the preset threshold includes application signaling that is transmitted discontinuously and that has a length less than the preset threshold and/or a packet that is transmitted discontinuously and that has a length less than the preset threshold.

In an implementable manner, the system message includes at least one system message block, a first system message block of the at least one system message block is used to carry primary scheduling information of the dedicated channel, and the primary scheduling information includes a length of a scheduling window, a scheduling period, and system message block mapping information.

When there is only one system message block, all information is stored in the system message block.

Information about the dedicated channel is included in the system message, and a scheduling period of the dedicated channel depends on scheduling performed by a system. When the to-be-transmitted system message cannot be sufficiently carried in one subframe, the system may perform scheduling in consecutive subframes in a scheduling window corresponding to the system message.

It should be understood that a window for consecutive scheduling needs to avoid a conflict with scheduling of other information, for example, an uplink timeslot of time division duplex (Time Division Duplex, TDD for short).

The dedicated channels may include multiple sub-channels. Therefore, optionally, the first system message block may be used to separately schedule each sub-channel on the dedicated channel, and secondary scheduling information of each sub-channel is transmitted separately by using another system message block of the at least one system message block except the first system message block. For example, secondary scheduling information of a sub-channel A may be included in a second system message block, and secondary scheduling information of a sub-channel B may be included in a third system message block. When the dedicated channel starts to be scheduled, scheduling is performed first in the first system message block, and corresponding subsequent system message blocks are mapped according to the system message block mapping information. Secondary scheduling information of different sub-channels is in different system message blocks, and therefore, scheduling periods of the sub-channel A and the sub-channel B herein may be different. By scheduling different system message transmission periods for different sub-channels, an application of a particular type can obtain information about the dedicated channel more quickly, and different sub-channels may be scheduled differently.

Alternatively, the first system message block is used to simultaneously schedule all sub-channels on the dedicated channel, and all secondary scheduling information of all sub-channels of the dedicated channel is stored and transmitted by using a second system message block of the at least one system message block.

In this case, all secondary scheduling information of all sub-channels is stored in one system block, thereby implementing simultaneous one-off scheduling.

The secondary scheduling information of each sub-channel includes: a resource block location, a frequency domain starting location, bandwidth, and a sub-channel scheduling period.

Resource blocks of each of the sub-channels are consecutive in a time domain. That is, scheduling of the resource blocks may be performed in consecutive subframes, and if scheduling is performed in consecutive subframes, a quantity of consecutive subframes in which scheduling is performed needs to be specified. For example, if a quantity of consecutive subframes in which scheduling is performed is 2, it indicates that scheduling is performed in two consecutive subframes for the sub-channel. If it is not specified, scheduling is performed in one subframe.

The resource configuration information carried in the system message further includes an orthogonal code set or a non-orthogonal code set that is used to identify the terminal; and when sending the application data by using the dedicated channel, the sending module selects an orthogonal code or a non-orthogonal code from the orthogonal code set or the non-orthogonal code set, and sends both the application data and the orthogonal code or the non-orthogonal code.

This is because many terminals may share a same dedicated channel. Due to mobility of the terminals, the mobile terminals may be unknown to the system. Therefore, when performing uplink transmission on the dedicated channel, the terminals need an orthogonal code or a non-orthogonal code for uplink distinction. The orthogonal code set may be predefined, and when there are multiple orthogonal code sets, a subset of the orthogonal code set may be used for different channels. When performing transmission, the terminal may select a code from the orthogonal code subset for transmission, and needs to carry an identifier of the terminal, for example, an international mobile subscriber identity (International Mobile Subscriber Identity, IMSI for short). When the terminal performs uplink transmission by using the orthogonal code, a conflict is resolved by using the orthogonal code. Therefore, in the system information, the terminal needs to be notified of the orthogonal code set (subset) used on the dedicated channel. A principle of using a non-orthogonal code is similar thereto, and details are not described herein again.

When resource configuration of the dedicated channel changes, the receiving module is further configured to: receive an updated system message, and obtain resource configuration information of the changed dedicated channel, and the sending module 11 is further configured to send the application data by using the changed dedicated channel.

By receiving a system message broadcasted by a base station, where the system message carries resource configuration information of a dedicated channel, the terminal can read the resource configuration information of the dedicated channel from the system message and store the resource configuration information, and use the dedicated channel when application data that is transmitted discontinuously and that has a length less than a preset threshold needs to be sent to the base station. In the entire process, there is no need to use new signaling and air interface resources; and when the dedicated channel is obtained, signaling resources and air interface resources are saved, and no normal network service is interfered with. After the dedicated channel is obtained, the channel may be used to transmit the application data, there is no need to exchange a great amount of signaling with the base station and establish a connection, and there is no need to occupy a relatively large quantity of signaling resources and air interface resources, thereby improving resource use efficiency of an entire system, and ensuring normal proceeding of normal network services.

Referring to FIG. 2, FIG. 2 is a schematic structural diagram of another embodiment of a terminal according to an embodiment of the present invention. In this embodiment, the terminal includes: an input apparatus 20, an output apparatus 21, a memory 22, and a processor 23, where the input apparatus 20, the output apparatus 21, the memory 22, and the processor 23 are connected by using a bus.

The memory 22 is configured to store a program, and the processor 23 is configured to call the program to perform the following steps:
receiving a system message broadcasted by a base station, where the system message carries resource configuration information of a dedicated channel, and the dedicated channel is used to transmit application data that is transmitted discontinuously and that has a length less than a preset threshold; and
sending, by using the dedicated channel and to the base station, the application data that is transmitted discontinuously and that has the length less than the preset threshold.

Optionally, the terminal is in an idle mode.

In an implementable manner, the system message includes at least one system message block, a first system message block of the at least one system message block is used to carry primary scheduling information of the dedicated channel, and the primary scheduling information includes a length of a scheduling window, a scheduling period, and system message block mapping information.

The first system message block is used to separately schedule each sub-channel on the dedicated channel, and secondary scheduling information of each sub-channel is transmitted separately by using another system message block of the at least one system message block except the first system message block.

Alternatively, the first system message block is used to simultaneously schedule all sub-channels on the dedicated channel, and all secondary scheduling information of all sub-channels of the dedicated channel is stored and transmitted by using a second system message block of the at least one system message block.

The secondary scheduling information of each sub-channel includes: a resource block location, a frequency domain starting location, bandwidth, and a sub-channel scheduling period.

Resource blocks of each of the sub-channels are consecutive in a time domain.

The resource configuration information carried in the system message further includes an orthogonal code set or a non-orthogonal code set that is used to identify the terminal; and when sending the application data by using the dedicated channel, the processor 43 selects an orthogonal code or a non-orthogonal code from the orthogonal code set or the non-orthogonal code set, and sends both the application data and the orthogonal code or the non-orthogonal code.

When resource configuration of the dedicated channel changes, the processor 43 is further configured to perform the following steps:
receiving an updated system message; obtaining resource configuration information of the changed dedicated channel; and sending the application data by using the changed dedicated channel.

The application data that is transmitted discontinuously and that has a length less than a preset threshold includes application signaling that is transmitted discontinuously and that has a length less than the preset threshold and/or a packet that is transmitted discontinuously and that has a length less than the preset threshold.

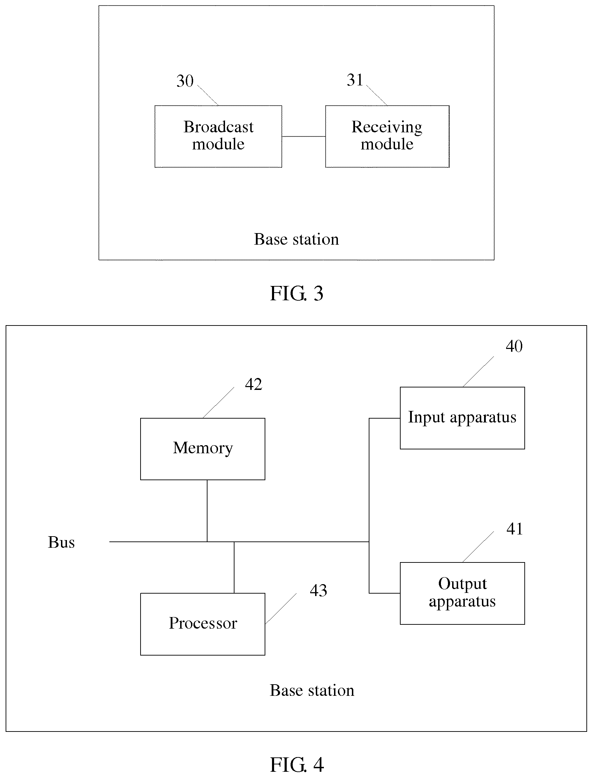

Referring to FIG. 3, FIG. 3 is a schematic structural diagram of an embodiment of a base station according to an embodiment of the present invention. In this embodiment, the base station includes:
a broadcast module 30, configured to broadcast a system message to a terminal, where the system message includes resource configuration information of a dedicated channel, and the dedicated channel is used to transmit application data that is transmitted discontinuously and that has a length less than a preset threshold, where
the application data that is transmitted discontinuously and that has a length less than a preset threshold includes application signaling that is transmitted discontinuously and that has a length less than the preset threshold and/or a packet that is transmitted discontinuously and that has a length less than the preset threshold; and
a receiving module 31, configured to receive the application data that is sent by the terminal by using the dedicated channel, that is transmitted discontinuously, and that has the length less than the preset threshold.

In an implementable manner, the system message includes at least one system message block, a first system message block of the at least one system message block is used to carry primary scheduling information of the dedicated channel, and the primary scheduling information includes a length of a scheduling window, a scheduling period, and system message block mapping information.

In an implementable manner, the first system message block is used to separately schedule each sub-channel on the dedicated channel, and secondary scheduling information of each sub-channel is transmitted separately by using another system message block of the at least one system message block except the first system message block.

Alternatively, in an implementable manner, the first system message block is used to simultaneously schedule all sub-channels on the dedicated channel, and all secondary scheduling information of all sub-channels of the dedicated channel is stored and transmitted by using a second system message block of the at least one system message block.

The secondary scheduling information of each sub-channel includes: a resource block location, a frequency domain starting location, bandwidth, and a sub-channel scheduling period.

Resource blocks of each of the sub-channels are consecutive in a time domain.

In an implementable manner, the resource configuration information carried in the system message further includes an orthogonal code set or a non-orthogonal code set that is used to identify the terminal, and the receiving module 31 is further configured to: receive the application data, and an orthogonal code or a non-orthogonal code that are sent by the terminal by using the dedicated channel, and recognize the terminal by using the orthogonal code or the non-orthogonal code.

In an implementable manner, when resource configuration of the dedicated channel changes, the broadcast 30 is further configured to broadcast an updated system message to the terminal, so that the terminal obtains resource configuration information of the changed dedicated channel, and uses the changed dedicated channel to send the application data.

Referring to FIG. 4, FIG. 4 is a schematic structural diagram of another embodiment of a base station according to an embodiment of the present invention. In this embodiment, the base station includes:
an input apparatus 40, an output apparatus 41, a memory 42, and a processor 43, where
the input apparatus 40, the output apparatus 41, the memory 42, and the processor 43 are connected by using a bus.

The memory 42 is configured to store a program, and the processor 43 is configured to call the program to perform the following steps:
broadcasting a system message to a terminal, where the system message includes resource configuration information of a dedicated channel, and the dedicated channel is used to transmit application data that is transmitted discontinuously and that has a length less than a preset threshold; and receiving the application data that is sent by the terminal by using the dedicated channel, that is transmitted discontinuously, and that has the length less than the preset threshold.

The system message includes at least one system message block, a first system message block of the at least one system message block is used to carry primary scheduling information of the dedicated channel, and the primary scheduling information includes a length of a scheduling window, a scheduling period, and system message block mapping information.

The first system message block is used to separately schedule each sub-channel on the dedicated channel, and secondary scheduling information of each sub-channel is transmitted separately by using another system message block of the at least one system message block except the first system message block.

The first system message block is used to simultaneously schedule all sub-channels on the dedicated channel, and all secondary scheduling information of all sub-channels of the dedicated channel is stored and transmitted by using a second system message block of the at least one system message block.

The secondary scheduling information of each sub-channel includes: a resource block location, a frequency domain starting location, bandwidth, and a sub-channel scheduling period.

Resource blocks of each of the sub-channels are consecutive in a time domain.

The resource configuration information carried in the system message further includes an orthogonal code set or a non-orthogonal code set that is used to identify the terminal, and the processor 43 is further configured to: receive the application data, and an orthogonal code or a non-orthogonal code that are sent by the terminal by using the dedicated channel, and recognize the terminal by using the orthogonal code or the non-orthogonal code.

When resource configuration of the dedicated channel changes, the processor 43 is further configured to broadcast an updated system message to the terminal, so that the terminal obtains resource configuration information of the changed dedicated channel, and uses the changed dedicated channel to send the application data.

The application data that is transmitted discontinuously and that has a length less than a preset threshold includes application signaling that is transmitted discontinuously and that has a length less than the preset threshold and/or a packet that is transmitted discontinuously and that has a length less than the preset threshold.

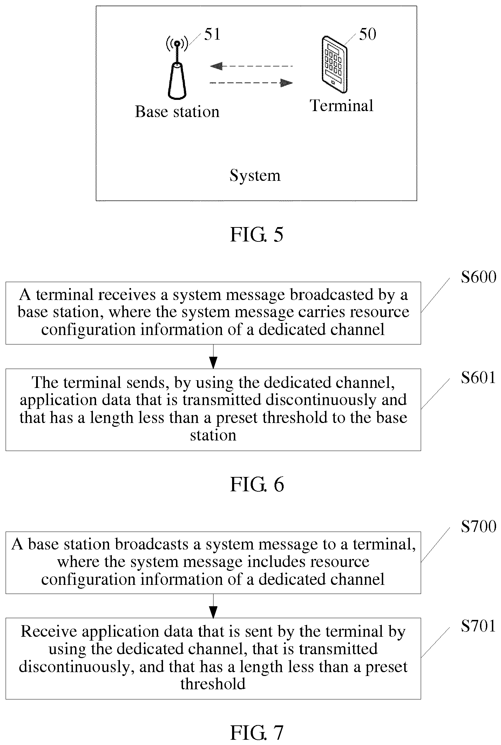

Referring to FIG. 5, FIG. 5 is a schematic structural diagram of a system according to an embodiment of the present invention. In this embodiment, the system includes a terminal 50 shown in FIG. 1 and a base station 51 shown in FIG. 3.

The base station 51 sends configuration information of an air-interface dedicated channel to the terminal 50 by using a system message, so that the terminal 50 transmits, by using the air-interface dedicated channel, application data that is transmitted discontinuously and that has a length less than a preset threshold.

Referring to FIG. 6, FIG. 6 is a schematic flowchart of an embodiment of a notification method according to an embodiment of the present invention. In this embodiment, the method includes:
S600: A terminal receives a system message broadcasted by a base station.

The system message carries resource configuration information of a dedicated channel. The dedicated channel is configured to transmit application data that is transmitted discontinuously and that has a length less than a preset threshold.

Optionally, the terminal is in an idle mode.

The terminal may read the resource configuration information of the dedicated channel from the system message, and store the resource configuration information.
S601: The terminal sends, by using a dedicated channel and to the base station, application data that is transmitted discontinuously and that has a length less than a preset threshold.

In an implementable manner, the system message includes at least one system message block, a first system message block of the at least one system message block is used to carry primary scheduling information of the dedicated channel, and the primary scheduling information includes a length of a scheduling window, a scheduling period, and system message block mapping information.

In an implementable manner, the first system message block is used to separately schedule each sub-channel on the dedicated channel, and secondary scheduling information of each sub-channel is transmitted separately by using another system message block of the at least one system message block except the first system message block.

Alternatively, in an implementable manner, the first system message block is used to simultaneously schedule all sub-channels on the dedicated channel, and all secondary scheduling information of all sub-channels of the dedicated channel is stored and transmitted by using a second system message block of the at least one system message block.

Scheduling information of each sub-channel includes: a resource block location, a frequency domain starting location, bandwidth, and a sub-channel scheduling period.

Resource blocks of each of the sub-channels are consecutive in a time domain.

The resource configuration information carried in the system message further includes an orthogonal code set or a non-orthogonal code set that is used to identify the terminal; and when sending the application data by using the dedicated channel, the terminal selects an orthogonal code or a non-orthogonal code from the orthogonal code set or the non-orthogonal code set, and sends both the application data and the orthogonal code or the non-orthogonal code.

When resource configuration of the dedicated channel changes, the terminal receives an updated system message, obtains resource configuration information of the changed dedicated channel, and uses the changed dedicated channel to send the application data.

The application data that is transmitted discontinuously and that has a length less than a preset threshold includes application signaling that is transmitted discontinuously and that has a length less than the preset threshold and/or a packet that is transmitted discontinuously and that has a length less than the preset threshold.

Another aspect of the embodiments of the present invention provides a computer storage medium, where the computer storage medium stores a program, and the program is used to perform steps according to any one of the method embodiments shown in FIG. 6.

Referring to FIG. 7, FIG. 7 is a schematic flowchart of another embodiment of a notification method according to an embodiment of the present invention. In this embodiment, the method includes:
S700: A base station broadcasts a system message to a terminal, where the system message includes resource configuration information of a dedicated channel, and the dedicated channel is used to transmit application data that is transmitted discontinuously and that has a length less than a preset threshold.
   Optionally, before S700, the base station may store the resource configuration information of the dedicated channel in the system message.
S701: Receive the application data that is sent by the terminal by using the dedicated channel, that is transmitted discontinuously, and that has the length less than the preset threshold.

In an implementable manner, the system message includes at least one system message block, a first system message block of the at least one system message block is used to carry primary scheduling information of the dedicated channel, and the primary scheduling information includes a length of a scheduling window, a scheduling period, and system message block mapping information.

In an implementable manner, the first system message block is used to separately schedule each sub-channel on the dedicated channel, and secondary scheduling information of each sub-channel is transmitted separately by using another system message block of the at least one system message block except the first system message block.

Alternatively, in an implementable manner, the first system message block is used to simultaneously schedule all sub-channels on the dedicated channel, and all secondary scheduling information of all sub-channels of the dedicated channel is stored and transmitted by using a second system message block of the at least one system message block.

Scheduling information of each sub-channel includes: a resource block location, a frequency domain starting location, bandwidth, and a sub-channel scheduling period.

Resource blocks of each of the sub-channels are consecutive in a time domain.

The resource configuration information carried in the system message further includes an orthogonal code set or a non-orthogonal code set that is used to identify the terminal, and the base station receives the application data, and an orthogonal code or a non-orthogonal code that are sent by the terminal by using the dedicated channel, and recognizes the terminal by using the orthogonal code or the non-orthogonal code.

In an implementable manner, when resource configuration of the dedicated channel changes, the base station stores resource configuration information of the changed dedicated channel to the system message, and broadcasts an updated system message to the terminal, so that the terminal obtains the resource configuration information of the changed dedicated channel, and sends the application data by using the changed dedicated channel.

The application data that is transmitted discontinuously and that has a length less than a preset threshold includes application signaling that is transmitted discontinuously and that has a length less than the preset threshold and/or a packet that is transmitted discontinuously and that has a length less than the preset threshold.

Another aspect of the embodiments of the present invention provides a computer storage medium, where the computer storage medium stores a program, and the program is used to perform steps according to any one of the method embodiments shown in FIG. 7.

According to the descriptions of the foregoing embodiments, the present invention has the following advantages:
By receiving a system message broadcasted by a base station, where the system message carries resource configuration information of a dedicated channel, the terminal can read the resource configuration information of the dedicated channel from the system message and store the resource configuration information, and use the dedicated channel when application data that is transmitted discontinuously and that has a length less than a preset threshold needs to be sent to the base station. In the entire process, there is no need to use new signaling and air interface resources; and when the dedicated channel is obtained, signaling resources and air interface resources are saved, and no normal network service is interfered with. After the dedicated channel is obtained, the channel may be used to transmit the application data, there is no need to exchange a great amount of signaling with the base station and establish a connection, and there is no need to occupy a relatively large quantity of signaling resources and air interface resources, thereby improving resource use efficiency of an entire system, and ensuring normal proceeding of normal network services.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The terminal, the base station, the system, and the notification method provided in the embodiments of the present invention are described in detail above. In this specification, specific examples are used to describe the principle and implementation manners of the present invention, and the description of the embodiments is only intended to help understand the method and core idea of the present invention. In addition, a person of ordinary skill in the art may, based on the idea of the present invention, make modifications with respect to the specific implementation manners and the application scope. Therefore, the content of this specification shall not be construed as a limitation to the present invention.

## Claims

1. A terminal, comprising:
a receiving module, configured to receive a system message broadcasted by a base station, wherein the system message carries resource configuration information of a dedicated channel, and the dedicated channel is used to transmit application data that is transmitted discontinuously and that has a length less than a preset threshold; and
a sending module, configured to send, by using the dedicated channel and to the base station, the application data that is transmitted discontinuously and that has the length less than the preset threshold.

2. The terminal according to claim 1, wherein:
the terminal is in an idle mode.

3. The terminal according to claim 1 or 2, wherein the system message comprises at least one system message block, a first system message block of the at least one system message block is used to carry primary scheduling information of the dedicated channel, and the primary scheduling information comprises a length of a scheduling window, a scheduling period, and system message block mapping information.

4. The terminal according to claim 3, wherein the first system message block is used to separately schedule each sub-channel on the dedicated channel, and secondary scheduling information of each sub-channel is transmitted separately by using another system message block of the at least one system message block except the first system message block.

5. The terminal according to claim 3, wherein the first system message block is used to simultaneously schedule all sub-channels on the dedicated channel, and all secondary scheduling information of all sub-channels of the dedicated channel is stored and transmitted by using a second system message block of the at least one system message block.

6. The terminal according to claim 4 or 5, wherein the secondary scheduling information of each sub-channel comprises: a resource block location, a frequency domain starting location, bandwidth, and a sub-channel scheduling period.

7. The terminal according to any one of claims 4 to 6, wherein resource blocks of each of the sub-channels are consecutive in a time domain.

8. The terminal according to any one of claims 1 to 7, wherein the resource configuration information carried in the system message further comprises an orthogonal code set or a non-orthogonal code set that is used to identify the terminal; and when sending the application data by using the dedicated channel, the sending module selects an orthogonal code or a non-orthogonal code from the orthogonal code set or the non-orthogonal code set, and sends both the application data and the orthogonal code or the non-orthogonal code.

9. The terminal according to any one of claims 1 to 8, wherein when resource configuration of the dedicated channel changes, the receiving module is further configured to: receive an updated system message, and obtain resource configuration information of the changed dedicated channel, and the sending module is further configured to send the application data by using the changed dedicated channel.

10. A terminal, comprising an input apparatus, an output apparatus, a memory, and a processor, wherein
the memory is configured to store a program, and the processor is configured to call the program to perform the following steps:
receiving a system message broadcasted by a base station, wherein the system message carries resource configuration information of a dedicated channel, and the dedicated channel is used to transmit application data that is transmitted discontinuously and that has a length less than a preset threshold; and
sending, by using the dedicated channel and to the base station, the application data that is transmitted discontinuously and that has the length less than the preset threshold.

11. The terminal according to claim 10, wherein:
the terminal is in an idle mode.

12. The terminal according to claim 10 or 11, wherein:
the system message comprises at least one system message block, a first system message block of the at least one system message block is used to carry primary scheduling information of the dedicated channel, and the primary scheduling information comprises a length of a scheduling window, a scheduling period, and system message block mapping information.

13. The terminal according to claim 12, wherein the first system message block is used to separately schedule each sub-channel on the dedicated channel, and secondary scheduling information of each sub-channel is transmitted separately by using another system message block of the at least one system message block except the first system message block.

14. The terminal according to claim 12, wherein the first system message block is used to simultaneously schedule all sub-channels on the dedicated channel, and all secondary scheduling information of all sub-channels of the dedicated channel is stored and transmitted by using a second system message block of the at least one system message block.

15. The terminal according to claim 13 or 14, wherein the secondary scheduling information of each sub-channel comprises: a resource block location, a frequency domain starting location, bandwidth, and a sub-channel scheduling period.

16. The terminal according to any one of claims 13 to 15, wherein resource blocks of each of the sub-channels are consecutive in a time domain.

17. The terminal according to any one of claims 10 to 16, wherein the resource configuration information carried in the system message further comprises an orthogonal code set or a non-orthogonal code set that is used to identify the terminal; and when sending the application data by using the dedicated channel, the processor selects an orthogonal code or a non-orthogonal code from the orthogonal code set or the non-orthogonal code set, and sends both the application data and the orthogonal code or the non-orthogonal code.

18. The terminal according to any one of claims 10 to 19, wherein when resource configuration of the dedicated channel changes, the processor is further configured to perform the following steps:
receiving an updated system message; obtaining resource configuration information of the changed dedicated channel; and sending the application data by using the changed dedicated channel.

19. Abase station, comprising:
a broadcast module, configured to broadcast a system message to a terminal, wherein the system message includes resource configuration information of a dedicated channel, and the dedicated channel is used to transmit application data that is transmitted discontinuously and that has a length less than a preset threshold; and
a receiving module, configured to receive the application data that is sent by the terminal by using the dedicated channel, that is transmitted discontinuously, and that has the length less than the preset threshold.

20. The base station according to claim 19, wherein the system message comprises at least one system message block, a first system message block of the at least one system message block is used to carry primary scheduling information of the dedicated channel, and the primary scheduling information comprises a length of a scheduling window, a scheduling period, and system message block mapping information.

21. The base station according to claim 20, wherein the first system message block is used to separately schedule each sub-channel on the dedicated channel, and secondary scheduling information of each sub-channel is transmitted separately by using another system message block of the at least one system message block except the first system message block.

22. The base station according to claim 20, wherein the first system message block is used to simultaneously schedule all sub-channels on the dedicated channel, and all secondary scheduling information of all sub-channels of the dedicated channel is stored and transmitted by using a second system message block of the at least one system message block.

23. The base station according to claim 21 or 22, wherein the secondary scheduling information of each sub-channel comprises: a resource block location, a frequency domain starting location, bandwidth, and a sub-channel scheduling period.

24. The base station according to any one of claims 21 to 23, wherein resource blocks of each of the sub-channels are consecutive in a time domain.

25. The base station according to any one of claims 19 to 24, wherein the resource configuration information carried in the system message further comprises an orthogonal code set or a non-orthogonal code set that is used to identify the terminal, and the receiving module is further configured to: receive the application data, and an orthogonal code or a non-orthogonal code that are sent by the terminal by using the dedicated channel, and recognize the terminal by using the orthogonal code or the non-orthogonal code.

26. The base station according to any one of claims 19 to 25, wherein when resource configuration of the dedicated channel changes, the broadcast module is further configured to broadcast an updated system message to the terminal.

27. A base station, comprising an input apparatus, an output apparatus, a memory, and a processor, wherein:
the memory is configured to store a program, and the processor is configured to call the program to perform the following steps:
broadcasting a system message to a terminal, wherein the system message includes resource configuration information of a dedicated channel, and the dedicated channel is used to transmit application data that is transmitted discontinuously and that has a length less than a preset threshold; and
receiving the application data that is sent by the terminal by using the dedicated channel, that is transmitted discontinuously, and that has the length less than the preset threshold.

28. The base station according to claim 27, wherein the system message comprises at least one system message block, a first system message block of the at least one system message block is used to carry primary scheduling information of the dedicated channel, and the primary scheduling information comprises a length of a scheduling window, a scheduling period, and system message block mapping information.

29. The base station according to claim 28, wherein the first system message block is used to separately schedule each sub-channel on the dedicated channel, and secondary scheduling information of each sub-channel is transmitted separately by using another system message block of the at least one system message block except the first system message block.

30. The base station according to claim 28, wherein the first system message block is used to simultaneously schedule all sub-channels on the dedicated channel, and all secondary scheduling information of all sub-channels of the dedicated channel is stored and transmitted by using a second system message block of the at least one system message block.

31. The base station according to claim 29 or 30, wherein the secondary scheduling information of each sub-channel comprises: a resource block location, a frequency domain starting location, bandwidth, and a sub-channel scheduling period.

32. The base station according to any one of claims 29 to 31, wherein resource blocks of each of the sub-channels are consecutive in a time domain.

33. The base station according to any one of claims 27 to 32, wherein the resource configuration information carried in the system message further comprises an orthogonal code set or a non-orthogonal code set that is used to identify the terminal, and the processor is further configured to: receive the application data, and an orthogonal code or a non-orthogonal code that are sent by the terminal by using the dedicated channel, and recognize the terminal by using the orthogonal code or the non-orthogonal code.

34. The base station according to any one of claims 27 to 33, wherein when resource configuration of the dedicated channel changes, the processor is further configured to broadcast an updated system message to the terminal.

35. A system, comprising:
the terminal according to any one of claims 1 to 9; and
the base station according to any one of claims 19 to 26.

36. A notification method, comprising:
receiving, by a terminal, a system message broadcasted by a base station, wherein the system message carries resource configuration information of a dedicated channel, and the dedicated channel is used to transmit application data that is transmitted discontinuously and that has a length less than a preset threshold; and
sending, by the terminal, by using the dedicated channel and to the base station, the application data that is transmitted discontinuously and that has the length less than the preset threshold.

37. The method according to claim 36, wherein:
the terminal is in an idle mode.

38. The method according to claim 36 or 37, wherein:
the system message comprises at least one system message block, a first system message block of the at least one system message block is used to carry primary scheduling information of the dedicated channel, and the primary scheduling information comprises a length of a scheduling window, a scheduling period, and system message block mapping information.

39. The method according to claim 38, wherein the first system message block is used to separately schedule each sub-channel on the dedicated channel, and secondary scheduling information of each sub-channel is transmitted separately by using another system message block of the at least one system message block except the first system message block.

40. The method according to claim 38, wherein the first system message block is used to simultaneously schedule all sub-channels on the dedicated channel, and all secondary scheduling information of all sub-channels of the dedicated channel is stored and transmitted by using a second system message block of the at least one system message block.

41. The method according to claim 39 or 40, wherein the secondary scheduling information of each sub-channel comprises: a resource block location, a frequency domain starting location, bandwidth, and a sub-channel scheduling period.

42. The method according to any one of claims 39 to 41, wherein resource blocks of each of the sub-channels are consecutive in a time domain.

43. The method according to any one of claims 36 to 42, wherein the resource configuration information carried in the system message further comprises an orthogonal code set or a non-orthogonal code set that is used to identify the terminal; and when sending the application data by using the dedicated channel, the terminal selects an orthogonal code or a non-orthogonal code from the orthogonal code set or the non-orthogonal code set, and sends both the application data and the orthogonal code or the non-orthogonal code.

44. The method according to any one of claims 36 to 43, wherein when resource configuration of the dedicated channel changes, the terminal receives an updated system message, obtains resource configuration information of the changed dedicated channel, and sends the application data by using the changed dedicated channel.

45. A computer storage medium, wherein the computer storage medium stores a program, and the program is used to perform steps according to any one of claims 36 to 44.

46. A notification method, comprising:
broadcasting, by a base station, a system message to a terminal, wherein the system message includes resource configuration information of a dedicated channel, and the dedicated channel is used to transmit application data that is transmitted discontinuously and that has a length less than a preset threshold; and
receiving the application data that is sent by the terminal by using the dedicated channel, that is transmitted discontinuously, and that has the length less than the preset threshold.

47. The method according to claim 46, wherein the system message comprises at least one system message block, a first system message block of the at least one system message block is used to carry primary scheduling information of the dedicated channel, and the primary scheduling information comprises a length of a scheduling window, a scheduling period, and system message block mapping information.

48. The method according to claim 47, wherein the first system message block is used to separately schedule each sub-channel on the dedicated channel, and secondary scheduling information of each sub-channel is transmitted separately by using another system message block of the at least one system message block except the first system message block.

49. The method according to claim 47, wherein the first system message block is used to simultaneously schedule all sub-channels on the dedicated channel, and all secondary scheduling information of all sub-channels of the dedicated channel is stored and transmitted by using a second system message block of the at least one system message block.

50. The method according to claim 48 or 49, wherein the secondary scheduling information of each sub-channel comprises: a resource block location, a frequency domain starting location, bandwidth, and a sub-channel scheduling period.

51. The method according to any one of claims 48 to 50, wherein resource blocks of each of the sub-channels are consecutive in a time domain.

52. The method according to any one of claims 46 to 51, wherein the resource configuration information carried in the system message further comprises an orthogonal code set or a non-orthogonal code set that is used to identify the terminal, and the base station receives the application data, and an orthogonal code or a non-orthogonal code that are sent by the terminal by using the dedicated channel, and recognizes the terminal by using the orthogonal code or the non-orthogonal code.

53. The base station according to any one of claims 46 to 52, wherein when resource configuration of the dedicated channel changes, the base station broadcasts an updated system message to the terminal.

54. A computer storage medium, wherein the computer storage medium stores a program, and the program is used to perform steps according to any one of claims 46 to 53.
